# EUROPEAN PATENT APPLICATION

(11) **EP 2 752 628 A1**
(43) Date of publication of application: **09.07.2014**
(21) Application number: 12827959.3
(22) Date of filing: 22.08.2012
(51) Int. Cl.: F25B 1/10, F25B 1/00, F25B 30/02

(54) **SUPERCRITICAL CYCLE AND HEAT PUMP HOT-WATER SUPPLIER USING SAME**

(30) Priority: 31.08.2011 JP 2011190130
(71) Applicant: Mitsubishi Heavy Industries, Ltd., Tokyo 108-8215 (JP)
(72) Inventor: WATANABE, Ken, Tokyo 108-8215 (JP); YOSHIDA, Shigeru, Tokyo 108-8215 (JP); OKADA, Takuya, Tokyo 108-8215 (JP); HOKAMURA, Taku, Tokyo 108-8215 (JP); OMURA, Minemasa, Tokyo 108-8215 (JP)
(74) Representative: Intès, Didier Gérard André
(86) International application number: PCT/JP2012/071129
(87) International publication number: WO 2013/031591

(57) **Abstract**

To provide a supercritical cycle capable of setting a relatively low design pressure for devices subsequent to an intermediate pressure receiver and thereby reducing manufacturing costs while reducing thickness of each device and thereby achieving enhanced performance in proportion to the reduced thickness, and a heat pump water heater using the same. A supercritical cycle, having a refrigerant circuit (21) configured to include a compressor (9), a radiator (11), a first electronic expansion valve (12), an intermediate pressure receiver (13), second electronic expansion valves (16A, 16B), and evaporators (17A, 17B), which are connected in this order via a pipe, includes: a pressure sensor (34) configured to be placed on a downstream side of the first electronic expansion valve (12) to detect intermediate pressure; and a control means (35) configured to prohibit control of the first electronic expansion valve (12) to an open direction when a detection value of the pressure sensor (34) satisfies a predetermined intermediate pressure condition.

## Description

### {Technical Field}

The present invention relates to a supercritical steam compression type refrigeration cycle (hereinafter referred to as a "supercritical cycle" in the present invention), in which pressure on a high-pressure side (discharge side of a compressor) becomes a critical pressure or more of refrigerant, and a heat pump water heater using the same.

### {Background Art}

In a supercritical cycle using CO2 refrigerant and the like, a design pressure of devices which constitute a refrigerant circuit is generally designed so as to correspond to the maximum pressure of a system of the circuit, and therefore pressure resistance performance of the devices needs to be enhanced. Consequently, in some cases, manufacturing costs are increased, and increased thickness causes a larger loss at the time of heat transfer, which causes deteriorated performance. In a system having a refrigeration cycle in which refrigerant circulates only in a single direction in particular, a section of the refrigerant circuit subsequent to a high-pressure side expansion valve has a pressure lower than that of the high-pressure side during normal operation. However, during transitional operation, the section may have a pressure increase. Therefore, in actuality, the refrigerant circuit is designed to support the maximum pressure of the system.

PTL 1 discloses a refrigerant circuit of a supercritical cycle configured to include a first expansion valve, an intermediate pressure receiver (gas liquid separation unit), and a second expansion valve, which are provided between a radiator and an evaporator, in which refrigerant flowing from the radiator is decompressed in the first expansion valve and refrigerant pressure at an outlet of the radiator is controlled so as to maintain cycle efficiency at an optimum value. Further, PTL 2 discloses a similar supercritical cycle configured to include a solenoid operated valve, a first pressure reduction device, an intermediate pressure receiver, and a second pressure reduction device, which are provided between a radiator and an evaporator, in which the pressure inside the intermediate pressure receiver is detected by a pressure sensor and the solenoid operated valve is opened and closed based on the detection so as to maintain the pressure inside the intermediate pressure receiver at a predetermined pressure in order to prevent reduction in refrigerant amount fed to the evaporator, i.e., deterioration in capacity of the refrigeration cycle.

### {Citation List}

### {Patent Literature}

{PTL 1}
   Japanese Unexamined Patent Application, Publication No. Hei 10-115470
{PTL 2}
   The Publication of Japanese Patent No. 3326835

### {Summary of Invention}

### {Technical Problem}

However, in the supercritical cycles disclosed in PTLs 1 and 2, the refrigerant pressure is reduced from high pressure to intermediate pressure with the first expansion valve or the first pressure reduction device, but it is not possible to control the pressure in the refrigerant circuit subsequent to the first expansion valve or the first pressure reduction device at the level of a predetermined intermediate pressure condition or lower nor to keep a pressure increase of the intermediate pressure not greater than a fixed value. Therefore, under a transitional operating condition, the pressure in a section subsequent to the first expansion valve or the first pressure reduction device may exceed a supercritical pressure, and therefore even in the case of the system having refrigerant circulating only in one direction, the devices subsequent to the first expansion valve or the first pressure reduction device need to be designed to support the maximum pressure of the system, which leads to unavoidable cost increase and deterioration in performance.

Further, when a supercritical cycle having a circuit configured to inject, to a compressor, refrigerant gas of intermediate pressure separated in an intermediate pressure receiver (gas liquid separation unit) falls in the above stated situation, refrigerant in a critical state under high pressure beyond supercritical pressure (refrigerant in the state close to liquid refrigerant) may possibly be injected to the compressor through a gas injection circuit, which may cause failures, damages and the like of the compressor.

The present invention has been made in view of such circumstances, and an object of the present invention is to provide a supercritical cycle capable of setting a relatively low design pressure (resisting pressure) for devices subsequent to an intermediate pressure receiver and thereby reducing manufacturing costs while reducing thickness of each device and thereby achieving enhanced performance in proportion to the reduced thickness, and a heat pump water heater using the same.

### {Solution to Problem}

In order to solve the above-described problem, a supercritical cycle and a heat pump water heater using the same in the present invention employ the following solutions.

More specifically, a supercritical cycle according to a first aspect of the present invention is a supercritical cycle having a refrigerant circuit configured by connecting a compressor, a radiator, a first electronic expansion valve, an intermediate pressure receiver, a second electronic expansion valve, and an evaporator in this order via a pipe, the supercritical cycle including: a pressure sensor configured to be placed on a downstream side of the first electronic expansion valve to detect intermediate pressure; and a control means configured to prohibit control of the first electronic expansion valve to an open direction when a detection value of the pressure sensor satisfies a predetermined intermediate pressure condition.

The first aspect of the present invention includes a pressure sensor configured to be placed on a downstream side of the first electronic expansion valve to detect intermediate pressure, and a control means configured to prohibit control of the first electronic expansion valve to an open direction when a detection value of the pressure sensor satisfies a predetermined intermediate pressure condition. Therefore, the pressure in a section subsequent to the first electronic expansion valve can constantly be controlled at the level of a predetermined intermediate pressure condition or lower, and even in the case where the pressure transitionally increases, the increase in pressure can be kept within a fixed value. Therefore, a relatively low design pressure (resisting pressure) can be set for devices subsequent to the intermediate pressure receiver and respective manufacturing costs can be reduced, while loss and the like at the time of heat transfer can be decreased by reducing the thickness of each device, and thereby enhanced performance in proportion to the reduced thickness can be achieved. In this connection, when CO2 refrigerant is used, a critical pressure thereof is about 7.2 MPa. Accordingly, even when it is assumed that the design pressure of the radiator and the like is, for example, 14 MPa, and that the design pressure for the devices subsequent to the intermediate pressure receiver is set slightly higher than critical pressure, the devices may be designed to be able to withstand about half the design pressure of the radiator. Accordingly, it can be estimated based on simple calculation that the thickness may be reduced to approximately half of its original size.

Further, in the supercritical cycle, the intermediate pressure receiver is a receiver with a gas-liquid separation function, and a gas injection circuit is provided that injects intermediate-pressure refrigerant gas, which was separated in the intermediate pressure receiver, to the compressor.

According to the first aspect of the present invention, the intermediate pressure receiver is a receiver with a gas-liquid separation function, and a gas injection circuit that injects intermediate-pressure refrigerant gas, which was separated in the intermediate pressure receiver, to the compressor is provided. Therefore, by injecting the intermediate-pressure refrigerant gas, which was separated in the intermediate pressure receiver, to the compressor via the gas injection circuit, an economizer effect thereby can enhance capacity and a coefficient of performance (COP). In this case, the pressure of the intermediate-pressure refrigerant injected to the compressor can constantly be controlled by the first electronic expansion valve at the level of a predetermined intermediate pressure condition or lower. Accordingly, high-pressure refrigerant, such as refrigerant in a critical state, is prevented from being injected to the compressor, which makes it possible to prevent failures, damages or the like of the compressor caused by injection of such refrigerant.

Further, in any one of the above-stated supercritical cycles, the intermediate pressure condition is set equal to or lower than a design pressure of the devices provided on the downstream side of the first electronic expansion valve.

According to the first aspect of the present invention, the intermediate pressure condition is set equal to or lower than a design pressure of the devices provided on the downstream side of the first electronic expansion valve. Therefore, by prohibiting control of the first electronic expansion valve to an open direction with the set pressure as a threshold, the intermediate pressure and the low pressure in the supercritical cycle are prevented from exceeding the design pressure of intermediate-pressure devices such as an intermediate pressure receiver or low-pressure devices such as an evaporator, which are provided on the downstream side of the first electronic expansion valve. Therefore, a relatively low design pressure can be set for the devices subsequent to the intermediate pressure receiver and thereby respective manufacturing costs can be reduced, while loss and the like at the time of heat transfer can be decreased by reducing the thickness of each device, and thereby enhanced performance of heat transfer can be achieved.

Further, a heat pump water heater according to a second aspect of the present invention includes any one of the above-described supercritical cycles, wherein the radiator is a refrigerant/water heat exchanger that performs heat exchange between refrigerant and water to heat water, and hot water can be produced by the refrigerant/water heat exchanger.

The second aspect of the present invention includes any one of the above-described supercritical cycles, wherein a radiator thereof is a refrigerant/water heat exchanger that performs heat exchange between refrigerant and water to heat water, and hot water can be produced through the refrigerant/water heat exchanger. Therefore, when the supercritical cycle is operated by a heat pump cycle to produce hot water, even under an operating condition which tends to cause increase in high pressure and intermediate pressure values as in the case of outdoor temperature being high, introduced water being at high temperature, or the like, stable operation can be achieved by constantly controlling the pressure in a section subsequent to the first electronic expansion valve at the level of a predetermined intermediate pressure condition or lower and by keeping a pressure increase within a fixed value. Therefore, a relatively low design pressure (resisting pressure) can be set for the devices subsequent to the intermediate pressure receiver and a heat pump water heater can be manufactured at a low cost, while loss and the like at the time of heat transfer can be decreased by reducing the thickness of each device and thereby enhanced performance can be achieved, so that enhanced capacity and enhanced performance of the heat pump water heater can be implemented.

### {Advantageous Effects of Invention}

According to the supercritical cycle in the first aspect of the present invention, the pressure in a section subsequent to the first electronic expansion valve can constantly be controlled at the level of a predetermined intermediate pressure condition or lower, and even in the case where the pressure transitionally increases, the increase in pressure can be kept within a fixed value. Therefore, a relatively low design pressure (resisting pressure) can be set for devices subsequent to the intermediate pressure receiver and respective manufacturing costs can be reduced, while loss and the like at the time of heat transfer can be decreased by reducing the thickness of each device and thereby enhanced performance in proportion to the reduced thickness can be achieved.

According to the heat pump water heater in the second aspect of the present invention, when the supercritical cycle is operated by a heat pump cycle to produce hot water, even under an operating condition which tends to cause increase in high pressure and intermediate pressure values as in the case of outdoor temperature being high, introduced water being at high temperature, or the like, stable operation can be achieved by constantly controlling the pressure in a section subsequent to the first electronic expansion valve at the level of a predetermined intermediate pressure condition or lower and keeping a pressure increase within a fixed value. Therefore, a relatively low design pressure (resisting pressure) can be set for devices subsequent to the intermediate pressure receiver and a heat pump water heater can be manufactured at a low cost, while loss and the like at the time of heat transfer can be decreased by reducing the thickness of each device and thereby enhanced performance can be achieved, so that enhanced capacity and enhanced performance of the heat pump water heater can be implemented.

### {Brief Description of Drawings}

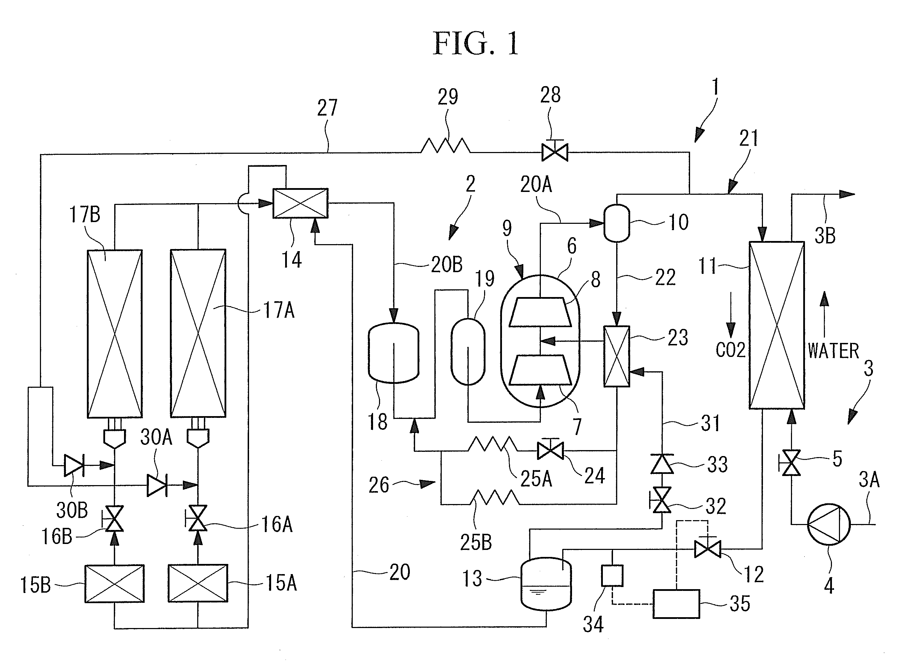

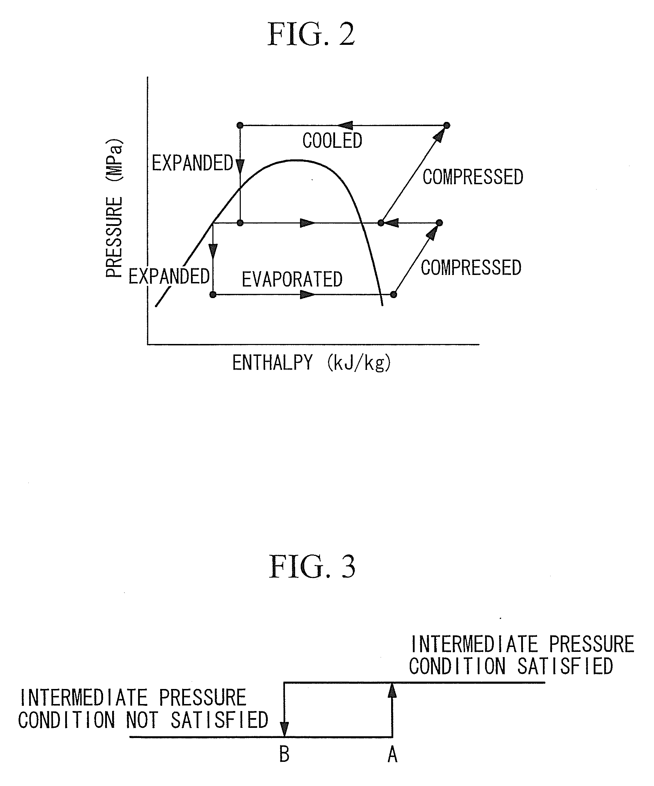

{Fig. 1} Fig. 1 is a refrigerant circuit view showing a heat pump water heater with a supercritical cycle according to one embodiment of the present invention applied thereto.
{Fig. 2} Fig. 2 is a Mollier chart showing a refrigerant circuit of the heat pump water heater with the supercritical cycle shown in Fig. 1 applied thereto.
{Fig. 3} Fig. 3 is a control state view for controlling the intermediate pressure of the heat pump water heater, with the supercritical cycle shown in Fig. 1 applied thereto, at the level of a predetermined intermediate pressure condition or lower.

### {Description of Embodiments}

Hereinbelow, one embodiment of the present invention will be described with reference to Figs. 1 to 3.

Fig. 1 is a refrigerant circuit view showing a heat pump water heater with a supercritical cycle according to one embodiment of the present invention applied thereto, and Fig. 2 shows a Mollier chart of Fig. 1.

A heat pump water heater 1 with the supercritical cycle of this embodiment applied thereto includes a supercritical cycle heat pump 2 using CO2 refrigerant and a water circulation channel 3 connected to a hot water storage tank unit which is omitted in the drawings.

The water circulation channel 3 on the side of the hot water storage tank unit is connected to the hot water storage tank and a water supply system which are omitted in the drawings, and includes a feed water-side channel 3A, which is connected to a water-side flow channel of a radiator (refrigerant/water heat exchanger) 11 in the supercritical cycle heat pump 2, and a hot water extraction-side channel 3B that extracts hot water produced by the refrigerant/water heat exchanger 11. The feed water-side channel 3A includes a water pump 4 and a flow control valve 5.

The supercritical cycle heat pump 2 is constituted from a closed cycle refrigerant circuit 21 which is configured by connecting, in the order via a refrigerant pipe 20, a two-stage compressor (compressor) 9 having a low stage-side compressor 7 and a high stage-side compressor 8 incorporated in a sealing housing 6, an oil separator 10 that separates oil in refrigerant gas, a radiator (refrigerant/water heat exchanger) 11 that radiates heat of refrigerant gas, a first electronic expansion valve 12 that decompresses refrigerant to an intermediate pressure, an intermediate pressure receiver 13 with a gas-liquid separation function, an internal heat exchanger 14 that performs heat exchange between intermediate-pressure refrigerant and low-pressure refrigerant sucked to the two-stage compressors 9, supercooling coils 15A and 15B, second electronic expansion valves 16A and 16B that decompress the intermediate-pressure refrigerant to low temperature/low pressure vapor-liquid two-phase refrigerant, a plurality of evaporators (air heat exchanger) 17A and 17B that perform heat exchange between outside air sent from a fan, which is omitted in the drawings, and the refrigerant, and first accumulator 18 and second accumulator 19 connected in series.

The second accumulator 19 provided on the downstream side in the refrigerant circuit 21 may be smaller in volume than the first accumulator 18 on the upstream side, and therefore be configured to be placed integrally with an outer circumference of the sealing housing 6 of the two-stage compressor 9 through a bracket or the like.

The radiator 11 of the supercritical cycle heat pump 2 is a refrigerant/water heat exchanger that performs heat exchange between water and refrigerant gas, in which the high-temperature/high-pressure refrigerant gas discharged from the two-stage compressor 9 is circulated to one refrigerant-side flow channel, while water is circulated to the other water-side flow channel via the water circulation channel 3. The refrigerant/water heat exchanger 11 is configured to produce hot water by heating water with the high-temperature/high-pressure refrigerant gas.

The refrigerant circuit 21 of the supercritical cycle heat pump 2 is connected to an oil return circuit 22 that returns oil, which was fed from the two-stage compressor 9 and separated in the oil separator 10 provided on a refrigerant discharge pipe 20A, to a refrigerant suction pipe 20B side of the two-stage compressor 9. The oil return circuit 22 includes a double-pipe heat exchanger 23 that performs heat exchange between oil and refrigerant flowing through a later-described gas injection circuit 31, and an oil return amount adjustment mechanism 26 constituted from a parallel circuit including a solenoid operated valve 24 and two capillary tubes 25A and 25B. The oil return circuit 22 is connected to the refrigerant suction pipe 20B placed between the first accumulator 18 and the second accumulator 19.

The refrigerant circuit 21 is configured to be connected to a hot gas bypass circuit 27 placed between the refrigerant discharge pipe 20A and an refrigerant inlet side of the evaporators 17A and 17B, and when frost is generated on the surface of the evaporators 17A and 17B during operation under low outdoor temperature or the like, the hot gas bypass circuit 27 introduces the high-temperature/high-pressure hot gas refrigerant discharged from the two-stage compressor 9 into the evaporators 17A and 17B to remove the frost. The hot gas bypass circuit 27 includes a solenoid operated valve 28 which is opened and closed when generation of frost is detected, a capillary tube 29 for refrigerant flow rate adjustment, and check valves 30A and 30B.

The refrigerant circuit 21 also includes a gas injection circuit 31 that injects the intermediate-pressure refrigerant gas, which was separated in the intermediate pressure receiver 13 with a gas-liquid separation function, into the sealing housing 6 of the two-stage compressor 9, which is under intermediate pressure gas atmosphere, via the double-pipe heat exchanger 23 provided in the oil return circuit 22. In order to prevent the refrigerant in the critical state from being injected to the two-stage compressor 9, the gas injection circuit 31 includes a solenoid operated valve 32 and a check valve 33 that open and close the gas injection circuit 31 under critical pressure of CO2 refrigerant.

Further, this embodiment is configured such that a pressure sensor 34 that detects intermediate pressure is placed in the refrigerant circuit 21 on the downstream side of the first electronic expansion valve 12 that decompresses the refrigerant to intermediate pressure, and a control means 35 is provided to prohibit control of the first electronic expansion valve 12 to an open direction when a detection value of the pressure sensor 34 satisfies a predetermined intermediate pressure condition. More specifically, as shown in Fig. 3, when a detection value of the pressure sensor 34 exceeds a set pressure A, which is set at a slightly higher value than the critical pressure (about 7.2 MPa) of CO2 refrigerant, the control means 35 determines that a predetermined intermediate pressure condition is satisfied and prohibits control of the first electronic expansion valve 12 to an open direction (to prohibit computation in an open direction), whereas when the detection value of the pressure sensor 34 becomes equal to or less than a set pressure B, which has certain hysteresis with respect to the set pressure A, the control means 35 is operated to cancel the control prohibition. Although control of the first electronic expansion valve 12 to an open direction is prohibited when the set pressure A is exceeded in this example, the control to an open direction may be prohibited and then the first electronic expansion valve 12 may also temporarily be closed.

The first electronic expansion valve 12 is generally controlled to decompress high-pressure refrigerant and control refrigerant pressure at an outlet of the radiator 11 based on a refrigerant temperatures at the outlet of the radiator 11 so as to maintain cycle efficiency at an optimum value. However, the first electronic expansion valve 12 is configured to include a control system that controls intermediate pressure so that the intermediate pressure condition is satisfied in priority to the general control as described in the foregoing. Moreover, although the set pressure A is set at a value slightly higher than the critical pressure (about 7.2 MPa) of CO2 refrigerant so as to suppress frequent ON/OFF operation of the solenoid operated valve 32 in this embodiment, the set pressure A may be set equal to the critical pressure.

With the above-described configuration, the following operational effects are implemented according to the present embodiment.

When the supercritical cycle heat pump 2 using CO2 refrigerant is operated in the heat pump water heater 1, high-temperature/high-pressure refrigerant gas compressed in two stages by the two-stage compressor 9 is sent to the oil separator 10 for separation of oil in the refrigerant, and then the refrigerant is introduced to the radiator (refrigerant/water heat exchanger) 11, where heat is exchanged with water which is circulated to the water-side flow channel from the feed water-side channel 3A of the water circulation channel 3. The water is heated and temperature thereof is made to increase by heat dissipation from the high temperature/high pressure refrigerant gas, and then the water is returned to the hot water storage tank (illustration omitted) through the hot water extraction-side channel 3B. Until the hot-water amount stored in the hot water storage tank reaches a specified amount, heat exchange between refrigerant and water is continued in the radiator (refrigerant/water heat exchanger) 11 without a break, and once the hot-water storage amount has reached the specified amount, hot water storing operation is terminated.

The refrigerant cooled by exchanging heat with water in the radiator 11 is decompressed by the first electronic expansion valve 12 which is controlled to maintain cycle efficiency at an optimum value, and arrives at the intermediate pressure receiver 13, where gas-liquid separation is performed. The intermediate-pressure gas refrigerant separated in the intermediate pressure receiver 13 travels through the solenoid operated valve 32, the check valve 33, and the double-pipe heat exchanger 23 and is then injected into the intermediate-pressure refrigerant gas in the sealing housing 6 of the two-stage compressor 9 by the gas injection circuit 31, before being sucked into the high stage-side compressor 8 for recompression. With an economizer effect by the gas injection, it becomes possible to enhance heating capacity and a coefficient of performance (COP) by the supercritical cycle heat pump 2 and to increase hot water supply capacity.

In the meanwhile, the liquid refrigerant separated in the intermediate pressure receiver 13 is heat-exchanged with low-pressure refrigerant gas which was evaporated in the evaporators 17A and 17B and is thereby supercooled in the internal heat exchanger (intercooler) 14. The liquid refrigerant then travels through the supercooling coils 15A and 15B and is decompressed by the second electronic expansion valves 16A and 16B to be low temperature/low pressure vapor-liquid two-phase refrigerant, before flowing into the evaporators (air heat exchanger) 17A and 17B. The refrigerant which flowed into the evaporators (air heat exchanger) 17A and 17B is heat-exchanged with outside air sent by a fan and is evaporated into gas due to absorption of heat from the outside air.

The refrigerant gasified in the evaporators 17A and 17B is heat-exchanged with the intermediate-pressure liquid refrigerant in the internal heat exchanger 14 and is thereby used for supercooling the intermediate-pressure liquid refrigerant. Then a liquid part (liquid refrigerant, oil) of the refrigerant is separated in the process of passing the first accumulator 18 and the second accumulator 19, and only gas refrigerant is sucked to the two-stage compressor 9 for recompression. The same operation is repeated thereafter for production of hot water. Fig. 2 shows a Mollier chart of the supercritical cycle through this two-stage compression and two-stage expansion gas injection cycle. Since the cycle itself is publicly known, a detailed description thereof is omitted.

When frost accumulates on the evaporators 17A and 17B at the time of hot water storing operation, defrosting operation can be performed by detecting frost accumulation, putting the solenoid operated valve 28 in an opened state, and introducing hot gas refrigerant, which was discharged from the two-stage compressor 9, into the evaporators 17A and 17B via the hot gas bypass circuit 27 from the downstream side of the oil separator 10. The oil separated from the refrigerant in the oil separator 10 passes the oil return circuit 22 and heats the intermediate-pressure refrigerant gas through heat exchange in the double-pipe heat exchanger 23. Then the oil passes the oil return amount adjustment mechanism 26 and is returned to the refrigerant suction pipe 20B placed between the first accumulator 18 and the second accumulator 19. The oil is once separated in the second accumulator 19, and then is picked up little by little through an oil return hole provided on a refrigerant exit pipe of the second accumulator 19, before being returned to the two-stage compressor 9.

Here, under the operating condition which tends to cause increase in high pressure and intermediate pressure values as in the case of outdoor temperature being high, introduced water being at high temperature, or the like, the high pressure value may transitionally increase. In this case, under general control, the first electronic expansion valve 12 is operated to an open direction (computation of general control is in an open direction). However, in this embodiment, when a detection value of the pressure sensor 34 provided downstream from the first electronic expansion valve 12 exceeds a set pressure A which satisfies an intermediate pressure condition preset based on the design pressure (resisting pressure) of the devices subsequent to the intermediate pressure receiver 13 as shown in Fig. 3, the control means 35 prohibits control of the first electronic expansion valve 12 to the open direction and functions to keep a pressure increase within a fixed value.

Therefore, according to the present embodiment, a relatively low design pressure (resisting pressure) can be set for devices subsequent to the intermediate pressure receiver 13 and respective manufacturing costs can be reduced, while loss and the like at the time of heat transfer can be decreased by reducing the thickness of each device and thereby enhanced performance in proportion to the reduced thickness can be achieved. As a result, cost reduction of the heat pump water heater 1 as well as enhanced performance due to capacity increase can be achieved.

In this connection, when CO2 refrigerant is used, critical pressure is about 7.2 MPa. Accordingly, even when it is assumed that the design pressure of the radiator 11 and the like is, for example, 14 MPa, and that the design pressure for the devices subsequent to the intermediate pressure receiver 13 is set slightly higher than the critical pressure, the devices may be designed to be able to withstand about half the design pressure of the radiator. Accordingly, it can be estimated based on simple calculation that the thickness may be reduced to approximately half of its original size.

Further, the present embodiment is configured such that the intermediate pressure receiver 13 is a receiver with a gas-liquid separation function, and the gas injection circuit 31 that injects intermediate-pressure refrigerant gas, which was separated in the intermediate pressure receiver 13, to the two-stage compressor 9 is provided. Therefore, by injecting the intermediate-pressure refrigerant gas, which was separated in the intermediate pressure receiver 13, to the two-stage compressor 9 via the gas injection circuit 31, an economizer effect thereby can enhance capacity and a coefficient of performance (COP) of the supercritical cycle heat pump 2.

At the same time, when gas injection is performed, the pressure of the intermediate-pressure refrigerant gas injected to the two-stage compressor 9 can constantly be controlled by the first electronic expansion valve 12 at the level of a predetermined intermediate pressure condition or lower. Accordingly, refrigerant under a pressure higher than the critical pressure, such as refrigerant in the critical state, is prevented from being injected to the two-stage compressor 9, which makes it possible to prevent failures, damages or the like of the two-stage compressor 9 caused by injection of such refrigerant.

Further, the intermediate pressure condition is set equal to or lower than the design pressure of the devices provided on the downstream side of the first electronic expansion valve 12. Accordingly, by prohibiting control of the first electronic expansion valve 12 to an open direction with the set pressure as a threshold, the intermediate pressure and low pressure in the supercritical cycle are prevented from exceeding the design pressures of intermediate-pressure devices such as an intermediate pressure receiver 13 or low-pressure devices such as evaporators 17A and 17B, which are provided on the downstream side of the first electronic expansion valve 12. Therefore, a relatively low design pressure can be set for the devices subsequent to the intermediate pressure receiver 13 and thereby respective manufacturing costs can be reduced, while loss and the like at the time of heat transfer can be decreased by reducing the thickness of each device and thereby enhanced performance can be achieved.

The present invention is not limited to the embodiments disclosed above and appropriate modifications may be made without departing from the scope of the present invention. For example, although an example of applying a supercritical cycle to the heat pump water heater 1 has been described in the above-described embodiments, it should naturally be understood that the supercritical cycle of the present invention is applicable not only to heat pump water heaters but is widely applicable to various chillers, air conditioners, heat pumps, and the like. As the refrigerant to be used, not only the CO2 refrigerant but other supercritical pressure refrigerants may also be used.

Although an example of using the two-stage compressor 9 has been described in the embodiments disclosed, it should naturally be understood that the present invention is not limited thereto, and a configuration using a single-stage compressor may also be used. Moreover, although an example of including each of the supercooling coils 15A and 15B, the second electronic expansion valves 16A and 16B, and the evaporators 17A and 17B as a plurality of systems has been described, each of these devices may be a single system. Further, although an example of connecting a plurality of the first accumulator 18 and the second accumulator 19 in series has been described, one accumulator may be employed instead. Moreover, although the pressure sensor 34 is placed on the refrigerant pipe on the downstream side of the first electronic expansion valve 12, the pressure sensor 34 may be provided on the intermediate pressure receiver 13 instead.

### {Reference Signs List}

- 1: heat pump water heater
- 2: supercritical cycle heat pump
- 9: two-stage compressor (compressor)
- 11: radiator (refrigerant/water heat exchanger)
- 12: first electronic expansion valve
- 13: intermediate pressure receiver
- 16A, 16B: second electronic expansion valve
- 17A, 17B: evaporator
- 20: refrigerant pipe
- 21: refrigerant circuit
- 31: gas injection circuit
- 34: pressure sensor
- 35: control means

## Claims

1. A supercritical cycle having a refrigerant circuit configured by connecting a compressor, a radiator, a first electronic expansion valve, an intermediate pressure receiver, a second electronic expansion valve, and an evaporator in this order via a pipe, the supercritical cycle comprising:
a pressure sensor configured to be placed on a downstream side of the first electronic expansion valve to detect intermediate pressure; and
a control means configured to prohibit control of the first electronic expansion valve to an open direction when a detection value of the pressure sensor satisfies a predetermined intermediate pressure condition.

2. The supercritical cycle according to claim 1, wherein
the intermediate pressure receiver is a receiver with a gas-liquid separation function, and
a gas injection circuit is provided that injects intermediate-pressure refrigerant gas, which was separated in the intermediate pressure receiver, to the compressor.

3. The supercritical cycle according to claim 1 or 2, wherein
the intermediate pressure condition is set equal to or lower than a design pressure of devices provided on the downstream side of the first electronic expansion valve.

4. A heat pump water heater, comprising
a supercritical cycle according to any one of claims 1 to 3, wherein
the radiator is a refrigerant/water heat exchanger that performs heat exchange between refrigerant and water to heat water, and
hot water can be produced by the refrigerant/water heat exchanger.
